# EUROPÄISCHE PATENTSCHRIFT

(11) **EP 1 053 193 B1**
(45) Veröffentlichungstag und Bekanntmachung des Hinweises auf die Patenterteilung: **06.11.2002**
(21) Anmeldenummer: 99907445.3
(22) Anmeldetag: 28.01.1999
(51) Int. Cl.: B65G 47/72

(54) **VORRICHTUNG ZUM VERTEILEN EINES SCHÜTTGUTSTROMES AUF MEHRERE TEILSTRÖME**
DEVICE FOR DISTRIBUTING A FLOW OF BULK MATERIAL AMONGST SEVERAL SUB-FLOWS
DISPOSITIF POUR REPARTIR UN COURANT DE PRODUIT EN VRAC EN PLUSIEURS COURANTS PARTIELS

(30) Priorität: 05.02.1998 DE 19804342
(43) Veröffentlichungstag der Anmeldung: 22.11.2000
(73) Patentinhaber: Exner, Hubertus, D-38667 Bad Harzburg (DE)
(72) Erfinder: Exner, Hubertus, D-38667 Bad Harzburg (DE)
(74) Vertreter: Einsel, Martin, Dipl.-Phys.
(86) Internationale Anmeldenummer: EP9900560
(87) Internationale Veröffentlichungsnummer: WO99039998

(56) Entgegenhaltungen:
- DE-A- 2 756 330
- US-A- 2 758 752

## Beschreibung

Die Erfindung betrifft eine Vorrichtung zum Verteilen eines Schüttgutstromes auf mehrere Teilströme.

Beim Verarbeiten von rieselfähigen Schüttgütern, hier insbesondere Altglasscherben, stellt sich das Problem, einen Materialstrom gleichmäßig in zwei oder mehr kleinere Materialströme aufzuteilen. Dies ist häufig für die weitere Verarbeitung, beispielsweise Sortierung des Schüttgutes nach Größe, Farbe, Gewicht oder ähnliches, erforderlich.

Aus der US-PS 2,674,381 ist eine Förder- und Verteilanlage für Schüttgut, wie Sand, Chemiegranulaten o. dgl. bekannt, bei der ein Zuführstrom diesen Materials einem mit einem Vibrator gekoppelten horizontalen Förderbereich zugeführt wird, der auch vertikale Bewegungen ausführt. Der Vibrator fördert das Schüttgut in Richtung von Einfüllöffnungen des Förderbereiches bzw. einer Förderrinne, in welche das Schüttgut fällt, sofern die Einfüllöffnung noch nicht mit Schüttgut aufgefüllt ist. Das Schüttgut bildet oberhalb der Einfüllöffnungen einen kleinen Berg, der, wird er zu groß, mechanisch geglättet wird, um Rückwirkungen z. B. auf den Zuführstrom zu vermeiden. Das über die Einfüllöffnungen nicht abgeführte Schüttgut wird im Idealfall dann an die nächste Einfüllöffnung weitergegeben und durchläuft den Prozeß emeut. Die Gefahr von Staubildung kann nur mit Hilfe einer aufwendigen Mechanik vermieden werden.

Die US-PS 2,758,752 beschreibt eine Anlage, mit der Granulate oder fließfähige Feststoffe aus einer einzelnen Zufuhrquelle auf mehrere Verarbeitungsstationen verteilt werden kann. Diese Anlage besitzt einen senkrechten Schacht, der über seine Höhe mehrere schräg nach unten verlaufende Abzweigungen aufweist. Diese Abzweigungen münden jeweils in einen Trichter. Der Trichter ist mit Abspermechanismen versehen. Sowie ein Trichter mit Material gefüllt ist, versperrt er automatisch die Abzweigung und stoppt damit die weitere Zufuhr an Material. Auf diese Weise soll sichergestellt werden, dass jede der Verarbeitungsstationen entweder vollständig in Betrieb bei optimaler Auslastung ist oder aber abgeschaltet bleiben kann. Komplizierte Absperrmechanismen sorgen für die Funktionsfähigkeit der Anlage.

Ein anderes ebenfalls relativ aufwendiges Verfahren ist in der WO 94/24029 beschrieben. Dort ist zum Verteilen eines Schüttgutstromes auf mehrere Teilströme eine Rutsche mit einer Steigung vorgesehen, die größer als der größte zu erwartende Böschungswinkel des Schüttgutes ist. In der Rutsche sind Einfüllöffnungen für unterhalb der Rutsche vorgesehene Teilstromvorratsbehälter angeordnet. Die Einfüllöffnungen der Vorratsbehälter sind so angeordnet, dass aufgrund des Schließverhaltens eine Rückwirkung zum vorangehenden Vorratsbehälter ausgeschlossen werden kann. Nachteilig an diesem Verfahren und dieser Vorrichtung ist jedoch, dass eine derartige Anlage aufgrund des aufwendigen Aufbaus störanfällig ist. Trotzdem ist eine zuverlässige und gleichmäßige Verteilung des Schüttgutstromes nicht gewährleistet.

Femer hat die Praxis gezeigt, dass Methoden, die für newton'sche Flüssigkeiten verwendet werden, für Schüttgüter nicht oder nur schwer verwendbar sind. Der Grund ist im pseudoplastischen Fließverhalten der Schüttgüter zu sehen, d. h., dass vor dem Einsetzen einer Fließbewegung eine Mindestschubspannung überwunden werden muss. Physikalisch sichtbar wird dies im Böschungswinkel von aufgehäuften Schüttgütern. Darüber hinaus sind die Fördereigenschaften von Schüttgütern von äußeren Faktoren, wie die Feuchtigkeit, Oberfläche, Form und/oder Stückgröße, abhängig. Insgesamt ist das Fließverhalten von Schüttgut nicht linear.

Bei anderen bekannten Verteilsystemen beeinflußt die Änderung der Einteilung an einem Teilstrom alle oder mehrere andere Teilströme. Aufgrund der Nichtlinearität des Fließverhaltens sind diese Effekte nur bedingt vorhersagbar und machen umfangreiche Maßnahmen für Korrektur und Aufrechterhaltung eines gleichmäßigen Materialstromes notwendig.

Aufgabe der Erfindung ist es daher, eine Verteilung von Schüttgütem auf Teilströme anzugeben, die eine gleichmäßige und rückwirkungsfreie Aufteilung erlaubt und dabei möglichst einfach aufgebaut ist.

Gelöst wird diese Aufgabe mit einer Vorrichtung gemäß Anspruch 1.

Überraschend werden durch den in Art einer stehenden Säule aufgestauten Schüttgutstrom an Öffnungen in dieser Säulenumhüllung (Rohr) gleichmäßige Teilströme abgezweigt, an denen sich jeweils nur soviele Schüttgutteilchen aus dem Hauptstrom herausbewegen, wie an dem Teilstrom abgefördert werden. An den Öffnungen bildet sich nämlich jeweils ein stabiler statischer Zustand aus, der durch Ablagerung von Schüttgut im Böschungswinkel in den Abzweigrohren entsteht. Bewegen sich nun Schüttgutteilchen aus dem offenen Ende des Rohres heraus, strömen tatsächlich nur soviele Teilchen von hinten nach, bis der statische Zustand einer im Böschungswinkel aufgeschütteten Abstützung wiederhergestellt ist.

Für eine Unterstützung der Abförderung stromabwärts der Teilströme wird eine Vibrationsförderung verwandt. Damit kann die in den Teilstrom abgezweigte Fördermenge beeinflußt werden. Zusätzliche Absperrvorrichtungen für einzelne Abgänge sind nicht erforderlich.

Besonders kostengünstig wird eine derartige Vorrichtung, wenn die Verteilungsrohre, Abzweigungen und Abzweigrohre aus dem Sanitärbereich bekannte, ineinandersteckbare Kunststoffrohre sind. Beispielsweise herkömmliche Abflußrohre gewünschter Dimensionen können einfach zusammengesteckt werden. Sollte ein Rohrstück verschleißen, kann leicht ein Ersatzrohr eingefügt werden. Derartige Abflußrohre können in Fachhandel und Baumärkten kostengünstig und lagermäßig beschafft werden.

Neben der vom Betrieb der Anlage selbst induzierten Vibrationen kann die Förderung des Schüttgutes in den im wesentlichen horizontal angeordneten Abzweigrohren durch einen Vibrationsgenerator unterstützt oder veranlaßt werden.

Um eine Verteilung in veschiedenen Etagen zu ermöglichen, ist es bevorzugt, daß mehrere an dem Verteilungsrohr übereinander angeordnete Abzweigungen vorgesehen sind. Die übereinanderliegend angeordneten Abzweigungen von Teilströmen führen beispielsweise jeweils zu stromabwärts nachgeordneten Schüttgutsortieranlagen, die aufgrund ihrer mechanischen Einrichtungen oft einen erheblichen Platzbedarf bei begrenzten Bearbeitungskapazitäten haben.

Dadurch, daß mehrere Verteilungsrohre im wesentlichen parallel nebeneinander angeordnet sind, können mehrere Weiterverarbeitungsanlagen stromabwärts der Abzweigungen auf jeder Raumetage vorgesehen werden.

Bei entsprechend nachgeschalteten Anlagen mit fünf parallelen Verarbeitungsrinnen ist es bevorzugt, daß fünf Verteilungsrohre in einer Reihe aneinanderliegend gruppiert und/oder vier Gruppen von Verteilungsrohren beabstandet zueinander in einer Ebene angeordnet sind.

Wenn die Verteilungsrohre von einem Bevorratungsbehälter mit Schüttgut versorgt sind, wobei der Behälter senkrecht zur durch die Verteilungsrohre aufgespannten Ebene V-förmigen Querschnitt und in Längsrichtung am Behälterboden Erhebungen zwischen den Verteilungsrohrgruppen aufweist, wird eine sichere Befüllung aller parallel zueinander angeordneten Verteilungsrohre gewährleistet, ohne daß Todzonen im Vorratsbehälter entstehen.

Nachfolgend wird die Erfindung bezugnehmend auf die beiliegende Zeichnung detailliert beschrieben.

Darin zeigt:
- **Figur 1**: eine teilweise geschnittene Seitenansicht einer erfindungsgemäßen Verteilungsanordnung und
- **Figur 2**: eine schematisierte Ansicht einer Ausführungsform der erfindungsgemäßen Vorrichtung mit zwanzig Verteilungsrohren

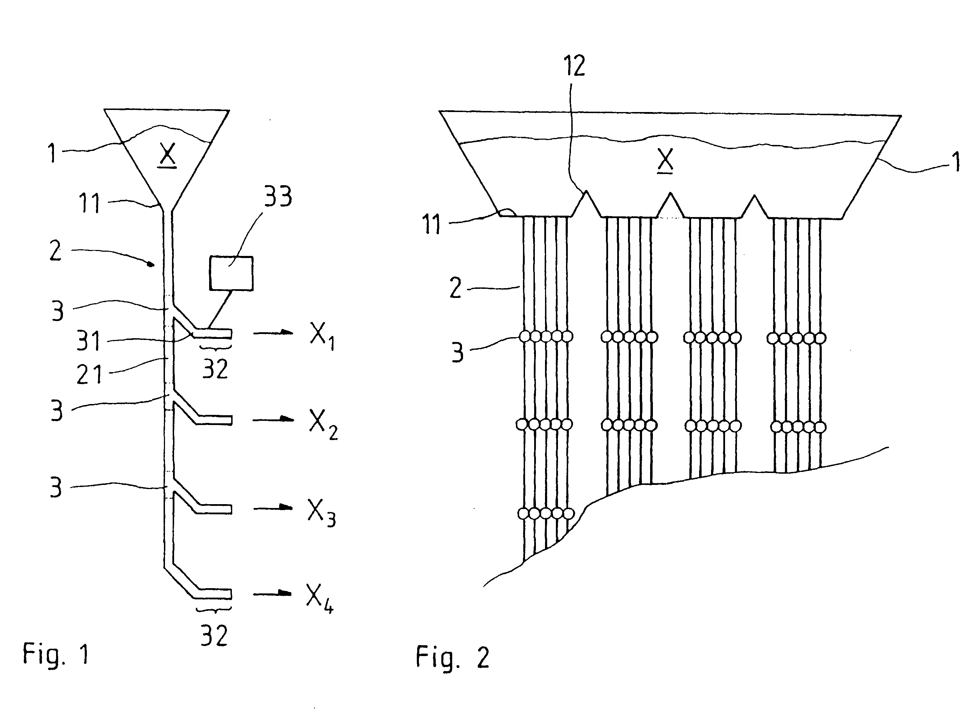

in Fig. 1 ist eine Schüttgutverteilungsvorrichtung in teils geschnittener Seitenansicht dargestellt. In Strömungsrichtung des Schüttgutes zeigt die Anlage oben einen Bevorratungsbehälter 1, in dem das zu verteilende Schüttgut X bevorratet ist. Der Bevorratungsbehälter 1 ist bevorzugt trichterförmig oder bei Anlagen mit größerer Längserstreckung (Fig. 2) im Querschnitt V-förmig ausgebildet. Am untersten Ende des Bevorratungsbehälters 1 ist ein Rohreinlaufbereich 11 angeordnet, an dem ein im wesentlichen vertikal angeordnetes Verteilungsrohr an 2 angeschlossen ist.

Das Verteilungsrohr 2 führt ähnlich eines Fallrohres vertikal durch mehrere Etagen eines etwaig unterhalb des Bevorratungsbehälters 1 angeordneten Gebäudes. Das Verteilungsrohr 2 ist aus herkömmlichem Kunststoffabflußrohren aus mehreren Rohrabschnitten 21 zusammengesteckt. In diesem Verteilungsrohr 2 sind in unterschiedlichen Höhen Abzweigungen 3 eingefügt, die ebenfalls aus herkömmlichen Abflußrohrelementen bestehen und im Gegensatz zur Montage in einem Abwasserfallrohr zur Zusammenführung zweier Abwasserströme hier um 180° gedreht eingefügt sind.

An jeder Abzweigung 3 ist an dem vom vertikalen Strang abzweigenden Stutzen ein Abzweigrohr 31 angeschlossen, das ebenfalls aus Standardabflußrohrelementen besteht und ein Teilstück 32 aufweist, das im wesentlichen horizontal oder mit genngem stromabwärtigen Gefälle ausgerichtet ist.

Mit dem im wesentlichen horizontal ausgerichteten Teilstück 32 ist ein Mittel zur Vibrationserzeugung 33 wirkverbunden.

In Fig. 2 ist ein Ausführungsbeispiel der Vorrichtung zum Verteilen von Schüttgut mit zwanzig Verteilungsrohren 2 schematisch dargestellt. Die Vorrichtung hat einen im wesentlichen ungeteilten Bevorratungsbehälter 1, der senkrecht zur in Fig. 2 dargestellten Zeichenebene den in Fig. 1 dargestellten V-förmigen Querschnitt aufweist. Am unteren Ende des Bevorratungsbehälters 1 sind vier Rohreinlaufbereiche 11 ausgebildet, zwischen denen keilförmige Erhebungen als Trennstege 12 zur Vermeidung von Todzonen im abfließenden Schüttgut vorgesehen sind. An den Rohreinlaufbereichen 11 sind jeweils fünf in einer Reihe unmittelbar aneinanderliegende Verteilungsrohre 2 angeschlossen. Insgesamt sind vier Gruppen a fünf Verteilungsrohre 2 am Bevorratungsbehälter 1 angeschlossen.

Jede Verteilungsrohrgruppe verläuft im wesentlichen vertikal durch mehrere Etagen und weist je fünf auf einer Höhe angeordnete Abzweigungen 3 in geeigneten Höhenlagen auf. An den fünf, an den Abzweigungen 3 austretenden Teilströmen des Schüttgutes werden entsprechende Anlagen zur Weiterbehandlung des Schüttgutes angeschlossen, beispielsweise eine Vorrichtung zur Vereinzelung von Altglasscherben mit nachgeschalteter Anlage zur Farbsortierung.

Die Anordnung und Ausgestaltung der Verteilungsrohre 2 und der Abzweigungen 3 sowie auch die Größe und Unterteilung des Bevorratungsbehälters 1 können dabei je nach Ausführung der an die Teilströme anzuschließenden Anlagen gruppiert und angeordnet sein. insbesondere kann eine gleichmäßige Schüttgutverteilung auf in mehreren Etagen übereinanderliegenden Anlagen ohne gegenseitige Beeinflussung bei der Schüttgutentnahme erreicht werden.

Nachfolgend wird das Verteilungsverfahren erläutert.

Zunächst wird der Bevorratungsbehälter 1 mit Schüttgut befüllt. Dies kann diskontinuierlich, beispielsweise durch Entladen eines Lkw oder im wesentlichen kontinuierlich mittels Förderband erfolgen. Das im Bevorratungsbehälter 1 eingefüllte Schüttgut X rutscht trichterförmig in das/die Verteilungsrohre 2 und füllt diese vollständig auf.

An den Abzweigungen 3 rutscht genau soviel Schüttgut in die Abzweigungsrohre, bis dort ein statischer Zustand durch Ausbildung einer Schüttgutböschung in im wesentlichen horizontal oder leicht abfallend angeordneten Teilstück 32 ausgebildet ist.

An den Ausgängen dieser Abzweigrohre 31 treten aufgrund von Eigenvibrationen der im Betrieb befindlichen Anlage oder mit einer Vibrationseinrichtung 33 erzeugten Vibrationen Teilströme X_{1....4} heraus. Die Teilströme X_{1····4} werden nachgeschalteten, nicht dargestellten Anlagen zugeführt.

Die Fördermenge in den einzelnen Teilströmen X_{1····4} ist lediglich von der Geometrie und/oder Anordnung des letzten Teilstücks 32 des Abzweigrohres 31 und den Vibrationen abhängig. Eine gegenseitige Beeinflussung der Teilströme X_{1····4} untereinander tritt nicht auf.

Insbesondere mit einer steuerbaren Vibrationseinrichtung 33 kann die jeweilige Teilstromfördermenge genau eingestellt werden. Die jeweils geförderten Schüttgutteilchen werden durch Nachrutschen stromaufwärtiger Teilchen bis zur quasi statischen Abstützung durch Verschließen der Abzweigung mit im Böschungswinkel aufgeschüttetem Schüttgut ersetzt.

Die Anlage ist sowohl aufgrund der verblüffenden Einfachheit für die Verteilung, wie auch aufgrund der verwendeten kostengünstigen Standardbauteile (HT-Kunststoffabflußrohre) äußerst kostengünstig und wirtschaftlich.

### Bezugszeichenliste

- 1: Bevorratungsbehälter
- 11: Rohreinlaufbereich
- 12: Trennsteg, Erhebung

- 2: Verteilungsrohr
- 21: Rohrabschnitt

- 3: Abzweigung
- 31: Abzweigrohr
- 32: Teilstück
- 33: Mittel zur Vibrationserzeugung

- X: Schüttgut
- X₁: Schüttgutteilstrom
- X₂: Schüttgutteilsrom
- X₃: Schüttgutteilstrom
- X₄: Schüttgutteilstrom

## Patentansprüche

1. Vorrichtung zum Verteilen eines Schüttgutstromes auf mehrere Teilströme mit wenigstens einem im Wesentlichen vertikal oder schräg angeordneten Verteilungsrohr (2), wobei das Verteilungsrohr (2) mehrere Abzweigungen (3) mit jeweils einem daran anschließenden Abzweigrohr (31) aufweist,
**dadurch gekennzeichnet,**
**dass** stromaufwärts vom Verteilungsrohr (2) ein Bevorratungsbehälter (1) angeordnet ist,
**dass** das Abzweigrohr (31) ein Teilstück (32) hat, das stromabwärts horizontal verläuft oder geringer als der Böschungswinkel des Schüttgutes geneigt ist und
**dass** dieses Teilstück (32) Abmessungen besitzt, die die Ausbildung einer den Teilstrom abschließenden Böschung erlauben.

2. Vorrichtung nach Anspruch 1,
**dadurch gekennzeichnet,**
**dass** das Teilstück (32) im Wesentlichen horizontal ausgerichtet ist.

3. Vorrichtung nach Anspruch 1 oder 2,
**dadurch gekennzeichnet,**
**dass** die Verteilungsrohre, Abzweigungen und Abzweigrohre aus dem Sanitärbereich bekannte, ineinandersteckbare Kunststoffrohre sind.

4. Vorrichtung nach Anspruch 1, 2 oder 3,
**dadurch gekennzeichnet,**
**dass** ein mit dem Teilstück (32) des Abzweigrohres (31) wirkverbundenes Mittel zur Vibrationserzeugung (33) vorgesehen ist.

5. Vorrichtung nach Anspruch 1, 2, 3 oder 4,
**dadurch gekennzeichnet,**
**dass** mehrere an dem Verteilungsrohr (2) übereinander angeordnete Abzweigungen (3) vorgesehen sind.

6. Vorrichtung nach Anspruch 1, 2, 3, 4 oder 5,
**dadurch gekennzeichnet,**
**dass** mehrere Verteilungsrohre (2) im Wesentlichen parallel nebeneinander angeordnet sind.

7. Vorrichtung nach Anspruch 6,
**dadurch gekennzeichnet,**
**dass** die Verteilungsrohre (2) in einer Reihe nebeneinanderstehend angeordnet sind.

8. Vorrichtung nach Anspruch 7,
**dadurch gekennzeichnet,**
**dass** fünf Verteilungsrohre (2) in einer Reihe nebeneinanderstehend gruppiert sind.

9. Vorrichtung nach einem der Ansprüche 6 bis 8,
**dadurch gekennzeichnet,**
**dass** mehrere, insbesondere vier Gruppen von Verteilungsrohren (2) beabstandet zueinander insbesondere in einer vertikalen Ebene angeordnet sind.

10. Vorrichtung nach Anspruch 7 und 9,
**dadurch gekennzeichnet,**
**dass** die Verteilungsrohre (2) von einem Bevorratungsbehälter (1) mit Schüttgut (X) versorgt sind, wobei der Behälter (1) senkrecht zur durch die Verteilungsrohre aufgespannten Ebene V-förmigen Querschnitt und in Längsrichtung am Behälterboden Erhebungen (12) zwischen den Verteilungsrohrgruppen aufweist.

## Claims

1. A device for dividing a stream of bulk material into a plurality of sub-streams comprising at least one substantially vertical or inclined distributing pipe (2), wherein the distributing pipe (2) comprises a plurality of bifurcations (3) each having a branch pipe (31) attached thereto,
**characterised**
**in that** a stock-piling container (1) is arranged upstream of the distributing pipe (2),
**in that** the branch pipe (31) has a sub-section (32) which, in the downstream direction, extends horizontally or is inclined to a lesser degree than the angle of repose of the bulk material and,
**in that** the dimensions of this sub-section (32) are such as to allow the formation of a terminating dam for the sub-stream.

2. A device in accordance with Claim 1,
**characterised in that**
the sub-section (32) is aligned substantially horizontally.

3. A device in accordance with Claim 1 or 2,
**characterised in that**
the distributing pipe, the bifurcations and the branch pipes consist of plug-in, synthetic material pipes such as are known from the field of sanitation.

4. A device in accordance with Claim 1, 2, or 3,
**characterised in that**
there is provided a means for generating vibrations (33) which is effectively coupled to the sub-section (32) of the branch pipe (31).

5. A device in accordance with Claim 1, 2, 3, or 4,
**characterised in that**
a plurality of bifurcations (3) are arranged one above the other along the distributing pipe (2).

6. A device in accordance with Claim 1, 2, 3, 4, or 5,
**characterised in that**
a plurality of distributing pipes (2) are arranged substantially parallel to one another.

7. A device in accordance with Claim 6,
**characterised in that**
the distributing pipes (2) are arranged adjacent to one another in a row.

8. A device in accordance with Claim 7,
**characterised in that**
five juxtaposed distributing pipes (2) are grouped together in a row.

9. A device in accordance with any of the Claims 6 to 8,
**characterised in that**
a plurality, in particular four, groups of mutually spaced distributing pipes (2) are provided, these being arranged, in particular, in a vertical plane.

10. A device in accordance with Claim 7 and 9,
**characterised in that**
the distributing pipes (2) are supplied with bulk material (X) from a stock-piling container (1), whereby the container (1) has a V-shaped cross-section perpendicular to the plane formed by the distributing pipes and has elevated sections on the base (12) of the container between the groups of distributing pipes in the longitudinal direction.

## Revendications

1. Dispositif de distribution d'un flux de produits en vrac sur plusieurs flux partiels avec au moins un tuyau de distribution (2) agencé pour l'essentiel verticalement ou diagonalement, le tuyau de distribution (2) présentant plusieurs embranchements (3) avec respectivement un tuyau d'embranchement (31) raccordé à celui-ci, **caractérisé en ce qu'**en amont du tuyau de distribution (2), un réservoir de stockage (1) est agencé, **en ce que** le tuyau d'embranchement (31) présente un tronçon (32) qui s'étend horizontalement en aval ou est moins incliné que le talus d'éboulement des produits en vrac, et **en ce que** ce tronçon (32) a des dimensions qui permettent de réaliser un talus délimitant le flux partiel.

2. Dispositif selon la revendication 1, **caractérisé en ce que** le tronçon (32) est orienté pour l'essentiel horizontalement.

3. Dispositif selon la revendication 1 ou 2, **caractérisé en ce que** les tuyaux de distribution, les embranchements et les tuyaux d'embranchement sont des tuyaux en matière plastique emboîtables, connus dans le domaine sanitaire.

4. Dispositif selon la revendication 1, 2 ou 3, **caractérisé en ce que** des moyens de génération de vibrations (33) reliés de façon active au tronçon (32) du tuyau d'embranchement (31) sont prévus.

5. Dispositif selon la revendication 1, 2, 3 ou 4, **caractérisé en ce que** des embranchements (3) agencés les uns au-dessus des autres sont prévus sur le tuyau de distribution (2).

6. Dispositif selon la revendication 1, 2, 3, 4 ou 5, **caractérisé en ce que** plusieurs tuyaux de distribution (2) sont agencés pour l'essentiel en parallèle les uns aux autres.

7. Dispositif selon la revendication 6, **caractérisé en ce que** les tuyaux de distribution (2) sont agencés de façon adjacente en série.

8. Dispositif selon la revendication 7, **caractérisé en ce que** cinq tuyaux de distribution (2) sont regroupés de façon adjacente en série.

9. Dispositif selon l'une quelconque des revendications 6 à 8, **caractérisé en ce que** plusieurs, en particulier quatre groupes de tuyaux de distribution (2) sont agencés de façon mutuellement espacée, en particulier dans un plan vertical.

10. Dispositif selon la revendication 7 ou 9, **caractérisé en ce que** les tuyaux de distribution (2) sont alimentés à partir d'un réservoir de stockage (1) avec des produits en vrac (X), le réservoir (1) présentant verticalement au plan fixé par les tuyaux de distribution une section transversale en forme de V et dans la direction longitudinale sur le fond du réservoir des élévations (12) entre les groupes de tuyaux de distribution.
